# EUROPEAN PATENT APPLICATION

(11) **EP 2 854 410 A1**
(43) Date of publication of application: **01.04.2015**
(21) Application number: 13306350.3
(22) Date of filing: 30.09.2013
(51) Int. Cl.: H04N 21/433, H04N 21/431, H04N 21/4728

(54) **Method and apparatus for simultaneously displaying and supervising video programs**

(71) Applicant: Thomson Licensing, 92130 Issy-les-Moulineaux (FR)
(72) Inventor: Guermoud, Hassane, 35510 Cesson Sevigné (FR); Chevallier, Louis, 35520 La Mézière (FR); Vigouroux, Jean-Ronan, 35000 Rennes (FR)
(74) Representative: Schmidt-Uhlig, Thomas

(57) **Abstract**

A method and an apparatus (2) for simultaneously displaying a first video program and supervising a second video program are described. The method comprises receiving (10) at least one video signal from which a first and a second video program are extracted. A region-of-interest is identified (11) in the second video program. The first video program and information corresponding to at least a portion of the region-of-interest of the second video program are provided (12) to a display, while at least a part of the second video program is recorded (13). In response to a change of the provided information corresponding to at least a portion of the region-of-interest, at least a part of the recorded second video program is retrieved (14) and provided (15) to a display.

## Description

### FIELD OF THE INVENTION

The present invention relates to a method and an apparatus for simultaneously displaying and supervising video programs. More specifically, the present invention relates to supervise and playback one video program while displaying another video program.

### BACKGROUND OF THE INVENTION

With the rapid development of multimedia signal processing and transmission technology, nowadays user equipment devices can support multiple digital or analog tuners, allowing for more than one channel or media content to be tuned, displayed, and/or recorded simultaneously. Moreover, the Picture-in-Picture (PIP) feature of a display allows a viewer to watch a main media channel while monitoring another media program that is displayed in a smaller window overlaying the main media content. Because of the PIP display and the possibility for swapping among multiple media channels, it is now easier and more convenient for a viewer to watch and follow several media channels at a same time.

However, there is a significant problem for the PIP display. The direct resolution reduction of a media program displayed in a smaller window causes a loss of detailed vision of the media content. The loss is serious especially for a media program including particular contents in which the viewer is most or even only interested. For example, for a viewer who would like to monitor a sporting event in PIP display while watching another main media program, the viewer might be interested in only the changes of the scores of the scoring event. It would be desired that only a region-of-interest of the PIP program, e.g., the score region of a sporting event, is displayed and enlarged in the PIP display for clarity. There is a possibility that the display of the specific event or the score region is monitored and provided by an extra data service. The data of the specific events, in a text format or an image format, is gathered by an external data service and transmitted directly to the user equipment device and the PIP display for displaying. Nevertheless, the monitored specific events are thus limited by the external service center. In addition, the viewer is unable to arbitrarily define and choose his/her own region-of-interest from the PIP program.

Instant replay of the PIP program right after an event happened is another desirable improvement for multiple media watching experience. Such feature is useful especially for sporting and entertainment events. Normally the switching between multiple media programs is controlled and triggered by the viewer through a user input, which is however not always efficient and might be troublesome for the viewer. There is a need for methods and systems that are capable of providing instant replay in an easier and more efficient manner.

### SUMMARY OF THE INVENTION

Therefore, it is an objective of the present invention to propose an improved solution for multiple media watching experience. More specifically, the present invention provides methods and systems for simultaneously displaying and supervising video programs accompanied with the possibility to monitor and playback a user-oriented specific event.

According to a first aspect of the invention, a method for simultaneously displaying a first video program and supervising a second video program comprises: receiving at least one video signal and extracting from the at least one video signal a first and a second video program; identifying a region-of-interest in the second video program; providing to a display the first video program and information corresponding to at least a portion of the region-of-interest of the second video program; recording the second video program; retrieving at least a part of the recorded second video program in response to a change of the provided information corresponding to at least a portion of the region-of-interest; and providing to a display the retrieved part of the second video program.

Preferably, the provision to a display of the first video program and information corresponding to at least a portion of the region-of-interest of the second video program is on a picture-in-picture basis. Similarly, the provision to a display of the retrieved part of the second video program can also be on the picture-in-picture basis.

In one embodiment, the retrieval and provision to a display at least a part of the recorded second video program are launched upon receipt of a user input in response to a change of the provided information corresponding to at least a portion of the region-of-interest of the second video program.

In another embodiment, the provision to a display of the first video program is in real time and the recording of the second video program is time-shift recording such that retrieving and providing to a display at least a part of the recorded second video program is delayed. More specifically, the provided information corresponding to at least a portion of the region-of-interest of the second video program is analyzed to record the change time when a change of the provided information occurred. The retrieved part of the second video program is provided to a display for playback starting from a time earlier than the change time.

In a further embodiment, the identification of the region-of-interest in the second video program comprises detecting a plurality of pixel points and extracting x and y coordinates of the pixel points in the second video program. Particularly, the identification comprises analyzing the SIFT, OpponentSIFT and/or SURF features of the pixel points.

According to a second aspect of the invention, an apparatus configured to simultaneously display a first video program and supervise a second video program comprises: a receiving unit for receiving at least one video signal and extracting from the at least one video signal a first and a second video program; a recording unit for recording the second video program; a controlling unit for identifying a region-of-interest in the second video program and for retrieving at least a part of the recorded second video program; and a processing unit for providing to a display the first video program, information corresponding to at least a portion of the region-of-interest of the second video program, and the retrieved part of the second video program, wherein the controlling unit retrieves at least a part of the recorded second video program in response to a change of the provided information corresponding to at least a portion of the region-of-interest of the second video program.

### BRIEF DESCRIPTION OF THE DRAWINGS

For a better understanding the invention shall now be explained in more detail in the following description with reference to the figures. It is understood that the invention is not limited to this disclosed exemplary embodiments and that specified features can also expediently be combined and/or modified without departing from the scope of the present invention as defined in the appended claims. In the figures:
- Fig. 1: is a schematic diagram to illustrate an apparatus implementing the method according to this invention.
- Fig. 2: is a flow chart illustrating the method for simultaneously displaying a first video program and supervising a second video program according to this invention.

### DETAILED DESCRIPTION OF PREFERRED EMBODIMENTS

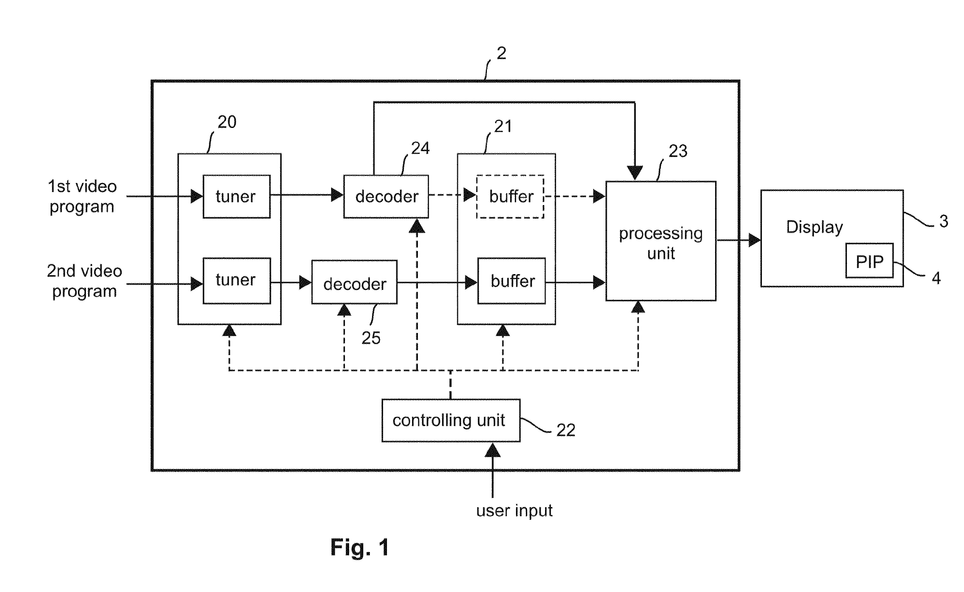

Fig. 1 shows an embodiment for the apparatus 2 of the present invention, which is configured to simultaneously display a first video program and supervise a second video program. The apparatus 2 comprises a receiving unit 20 for receiving at least one video signal and extracting from the at least one video signal at least a first and a second video program, a recording unit 21 for recording at least one of the first and second video programs, a controlling unit 22 and a processing unit 23. For example, the apparatus 2 can be a set top box or similar external devices that are capable of receiving and transmitting video signals. Alternatively, the apparatus 2 can also be a device integrated in a TV set. The receiving unit 20 can include one or multiple tuners respectively receiving the at least one video signal. The recording unit 21 can be a memory including RAM, ROM, hard disks, hashdisk and hybrid types of memory. Preferably, the recording unit 21 includes at least a circular buffer associated to a corresponding tuner in the receiving unit 20 for time-shift recording at least one video programs extracted from the at least one video signal. It is optional that the apparatus 2 further includes decoders 24, 25 or similar devices between the receiving unit 20 and the recording unit 21. As in the example of a set top box, the decoders 24, 25 can be placed between and correspondingly connect to the tuners and the circular buffers.

The controlling unit 22 is used for managing the various devices in the apparatus 2, such as asking the receiving unit 20 to receive at least one video signal and extract the video programs, and asking the recording unit 21 to record the video programs. The controlling unit 22 may further include a user input unit (not shown) for receiving and transmitting a user input. Alternatively, the user input unit may be arranged separately from the controlling unit 22. For example, the user input unit can be a remote control device that is capable for a user to enter an input. The processing unit 23 provides to a display 3 the video programs and the information thereof, and can be, for example, a multiplexer or a similar device. Preferably, the display 3 allows watching one video program on the full main screen and at the same time displaying another program in an inserted window as a Picture-in-Picture (PIP) display 4. With the help of the apparatus 2, at least one video signal including video programs can be received and transmitted to a display 3 connected thereto for display.

It should be understood that the amount of video signals received by the apparatus 2 which implements the method of the present invention is not limited. Similarly, the amount of the video programs included in the at least one video signal is also not limited. The at least one video signal can come from, for example, a source of RF signal such as a television antenna, an input from a cable, microwave, fiber optic, satellite television system, or the like. Alternatively, the video signals can be provided from an auxiliary source such as a DVD or Blue-ray player device, VCRs, computers, etc. The at least first and second video programs can come from a same or different video signals. In other words, each individual video program is independently extracted from the at least one video signal. Accordingly, the configuration of the apparatus 2 explained above is flexible and adjustable to receive multiple video signals and extract multiple video programs. In the case of a set top box, the apparatus 2 can comprise multiple tuners and circular buffers, as well as any additional or alternative devices for implementation of the method of the present invention. Particularly, the apparatus 2 can receive video signals in the receiving unit 20 or from any other type of signal source, and extract the video programs from the video signals. For example, the first video program can be extracted from a video signal received in a tuner while the second video program can be provided from a DVD player. Alternatively, both of the video programs can come from a same video signal.

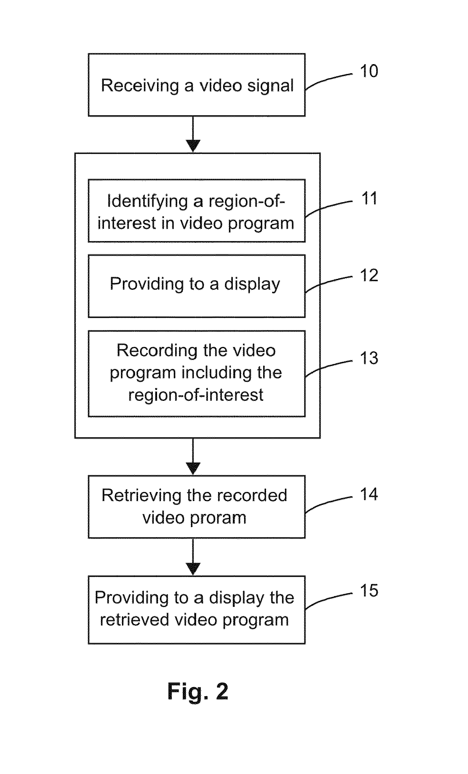

As shown in Fig. 2, a preferred embodiment of the method according to the present invention comprises: receiving 10 at least one video signal and extracting from the at least one video signal a first and a second video program; identifying 11 a region-of-interest in the second video program; providing 12 to a display the first video program and information corresponding to at least a portion of the region-of-interest of the second video program; recording 13 the second video program; retrieving 14 at least a part of the recorded second video program in response to a change of the provided information corresponding to at least a portion of the region-of-interest; and providing 15 to a display the retrieved part of the second video program.

Referring to Fig. 1, the method of the present invention will be further explained with the preferred embodiment of the apparatus 2 as a set top box. The two tuners of the receiving unit 20 respectively receive and transmit to the corresponding decoders 24, 25 a first and a second video program extracted from at least one video signal. In the case that there is only one circular buffer in the recording unit 21, the first video program would be directly transmitted to the processing unit 23, followed by being provided to the display 3 for display. The second video program would be transmitted to and stored in the circular buffer through the corresponding decoder. Optionally, when there are two circular buffers in the recording unit 21, both of the first and second video programs can be stored in the recording unit 21.

The controlling unit 22 identifies a region-of-interest in the second video program. Herein, the region-of-interest (ROI) refers to a region a user is most interested in or pays more attention to than other regions on a screen or a frame of the second video program. For example, the ROI might be a score region of a sporting event or a particular stock shown in stock quotes. The identification of the ROI can be accomplished by a user request or automatically by the apparatus 2 provided with predetermined conditions. Once the ROI is identified, information corresponding to at least a portion of the ROI is analyzed and provided to the processing unit 23. The information can be text, image, pixel points, or any other format of information. Subsequently, the information is provided to a display via the processing unit 23. For example, if the ROI is a score region of a sporting event, which is a pixel image and includes the background image and the numbers shown in the front to represent the scores, the information of this ROI could only be the pixel points corresponding to the numbers. Alternatively, the information can also refer to the whole image of the ROI including the numbers and the background image. Preferably, this information corresponding to at least a portion of the ROI of the second video program is displayed on the PIP display 4, while the display 3 displays the first video program which is directly transmitted to the display without analysis and extraction of a ROI. Of course, the display for the first video program and the information corresponding to at least a portion of the ROI of the second video program can be vice versa.

While the first video program and the information corresponding to at least a portion of the ROI of the second video program is displayed by the display 3, the information of the ROI is analyzed continuously. At the same time, the second video program is recorded by the recording unit 21. It is preferred that the recording of at least a part of the second video program is time-shift recording in the circular buffer of the recording unit 21. In other words, the first video program is provided to the display 3 in real time, and the second video program is time-shift recorded in the circular buffer such that the subsequent retrieval and provision to a display of at least a part of the second video program is delayed.

Once a change of the provided information is detected, the retrieval and provision to a display of at least a part of the second video program stored in the circular buffer is launched, either automatically by the controlling unit 23 of the apparatus 2 or upon receipt of a user input via a user input unit. The retrieved part of the second video program is subsequently provided to a display for playback via the processing unit 23. Preferably, the retrieved part of the second video program is displayed as a PIP 4, to which the information corresponding to at least a portion of the ROI of the second video program is likewise provided. Preferably, the provided information corresponding to at least a portion of the region-of-interest of the second video program is analyzed in order to record the change time when a change of the information occurred. The playback of the retrieved part of the second video program starts accordingly from a time earlier than the recorded change time. For example, if a change of the information occurs at the 30^{th} minute of the video program, the playback of the retrieved part of the video program may start at the 27^{th} or 28^{th} minute thereof. The size of the circular buffer of the recording unit 21 depends on the size image and video sequence duration to be retrieved and reviewed.

In one embodiment, the first video program can be a TV channel such as news or movies, and the second video program is a sporting event for which the ROI for a viewer might be the score region. Subsequent to the receipt of the two video programs, the first video program is transmitted to the display 3 directly and the sporting event is buffered and stored in the recording unit 21. The information corresponding to at least a portion of the score region of the sporting event, which can be the score numbers as described above, is transmitted to the PIP display 4 for displaying. In other words, the viewer can watch the main TV channel on the display 3 while at the same time supervising the scores of the sporting event on the PIP display 4.

The scores of the sporting event, i.e. the information corresponding to the second video program, is continuously supervised and analyzed by the apparatus 2. Once there is a change for the scores, the retrieval of the stored sporting event is triggered. A part of the sporting event is retrieved by the controlling unit 22 and the processing unit 23, and is play backed on the PIP display 4. This playback can be launched automatically by the apparatus 2 or by a user input when the viewer is alarmed by the change of the scores. The change time of the scores is recorded, and the playback of the sporting event can start at a predetermined time earlier than the change time. That is, the viewer can review back the most important period of scoring right before the score changes.

One example for the identification of the ROI in the second video program comprises detecting a plurality of pixel points and extracting x and y coordinates of the pixel points. Particularly, the identification of the ROI is based on optical character recognition conducted by analyzing SIFT, OpponentSIFT and/or SURF features of the pixel points. SIFT is a robust calculation to detect and describe local features in images, which is well-known technique for the skilled in the art, of which the details would be omitted here.

In an embodiment, the detection step of the SIFT technique is utilized for the identification of the ROI in the second video program according to the present invention. It is accomplished by detecting pixel points in a plurality of successive frames of the second video program, comparing the descriptors, e.g., the x and y coordinates, of the pixel points among the frames, and cumulating the descriptors through a histogram from frame to frame to identify the specific pixel points. For example, when applied to the score region of a sporting event, the bins of the histogram would indicate the pixel points corresponding to the number of the scores, since the score region is a relatively static region in the frames of the video program. The analysis of the cumulated histogram, which is an easy and convenient technique, can thus help extract the location of the pixel points corresponding to a region in which a viewer is most interested. The identification result of the SIFT technique is more robust and precise than other techniques. Nowadays it is common and essential for a media viewer to acquire much information at the same time. According to the method of the present invention described above, a viewer can simultaneously watch a video program while supervise another one. By identifying the ROI of the video program and displaying information corresponding thereto, a viewer can focus on the most interesting information for a second video program while watching a first video program. It is especially important and valuable when the ROI of the second video program is displayed in a PIP mode. Since only the ROI is displayed, the resolution of ROI of the second video program is increased which would not be the case if the video program is displayed with its original whole image. In addition, the possibility to playback a part of the recorded second video program also improves the viewing experience, especially when the playback is launched corresponding to a change of the most interesting information. A viewer can thus finish watching the main video program without loss of important information about another video program.

## Claims

1. A method for simultaneously displaying a first video program and supervising a second video program, comprising:
receiving (10) at least one video signal and extracting from the at least one video signal a first and a second video program;
identifying (11) a region-of-interest in the second video program;
providing (12) to a display the first video program and information corresponding to at least a portion of the region-of-interest of the second video program;
recording (13) the second video program;
retrieving (14) at least a part of the recorded second video program in response to a change of the provided information corresponding to at least a portion of the region-of-interest; and
providing (15) to a display the retrieved part of the second video program.

2. The method of claim 1, wherein the step of providing (12) to a display the first video program and information corresponding to at least a portion of the region-of-interest of the second video program is on a picture -in-picture basis.

3. The method of claims 1 or 2, wherein the steps of retrieving (14) and providing (15) to a display at least a part of the recorded second video program are launched upon receipt of a user input in response to a change of the provided information corresponding to at least a portion of the region-of-interest.

4. The method of any one of the claims 1 to 3, wherein providing (12) to a display the first video program is in real time and recording (13) the second video program is time-shift recording such that retrieving (14) and providing (15) to a display at least a part of the recorded second video program is delayed.

5. The method of claim 4, further comprising analyzing the information corresponding to at least a portion of the region-of-interest of the second video program to record the change time when a change of the provided information occurred, wherein the retrieved part of the second video program is provided to a display for playback starting from a time earlier than the change time.

6. The method of any one of claims 1 to 5, wherein the step of identifying (11) the region-of-interest in the second video program comprises detecting a plurality of pixel points and extracting x and y coordinates of the pixel points in the second video program.

7. The method of claim 6, wherein identifying (11) the region-of-interest in the second video program comprises analyzing the SIFT, OpponentSIFT and/or SURF features of the pixel points.

8. The method of any one of claims 1 to 7, wherein the step of providing (15) to a display the retrieved part of the second video program is on a picture-in-picture basis.

9. An apparatus (2) configured to simultaneously display a first video program and supervise a second video program, comprising:
a receiving unit (20) for receiving at least one video signal and extracting from the at least one video signal a first and a second video program;
a recording unit (21) for recording the second video program;
a controlling unit (22) for identifying a region-of-interest in the second video program and for retrieving at least a part of the recorded second video program; and
a processing unit (23) for providing to a display (3) the first video program, information corresponding to at least a portion of the region-of-interest of the second video program, and the retrieved part of the second video program,
wherein the controlling unit (22) retrieves at least a part of the recorded second video program in response to a change of the provided information corresponding to at least a portion of the region-of-interest of the second video program.

10. The apparatus of claim 9, further comprises an input unit for receiving and transmitting a user input, wherein the controlling unit (22) retrieves at least a part of the recorded second video program upon receipt of a user input in response to a change of the provided information corresponding to at least a portion of the region-of-interest.

11. The apparatus of claims 9 or 10, wherein the recording unit (21) includes a circular buffer such that recording the second video program is time-shift recording.

12. The apparatus of any one of claims 9 to 11, wherein the controlling unit (22) analyzes the information corresponding to at least a portion of the region-of-interest of the second video program to record the change time when a change of the provided information occurred, and the processing unit (23) provides to a display (3) the retrieved part of the second video program for playback starting from a time earlier than the change time.

13. The apparatus of any one of claims 9 to 12, wherein the controlling unit (22) identifies a region-of-interest in the second video program by detecting a plurality of pixel points and extracting x and y coordinates of the pixel points in the second video program.
